# EUROPÄISCHE PATENTSCHRIFT

(11) **EP 0 911 535 B1**
(45) Veröffentlichungstag und Bekanntmachung des Hinweises auf die Patenterteilung: **05.12.2001**
(21) Anmeldenummer: 98106996.6
(22) Anmeldetag: 17.04.1998
(51) Int. Cl.: F16B 37/04, F16L 3/24

(54) **Verankerungseinheit mit Rückstellmittel**
Fastening unit with return means
Dispositif de fixation avec moyens de rappel

(30) Priorität: 04.10.1997 DE 19743945
(43) Veröffentlichungstag der Anmeldung: 28.04.1999
(73) Patentinhaber: Mefa-Dübelfabrik Friedrich Krätzer GmbH & Co., 74635 Kupferzell (DE)
(72) Erfinder: Deffner, Heinz, 74635 Kupferzell (DE)
(74) Vertreter: Patentanwälte Bartels und Partner

(56) Entgegenhaltungen:
- DE-A- 4 447 456
- FR-A- 2 636 687
- US-A- 4 285 379
- US-A- 4 666 355
- US-A- 5 655 865

## Beschreibung

Die Erfindung betrifft eine Verankerungseinheit zum Befestigen von Rohren od. dgl. Gegenständen mit den Merkmalen des Oberbegriffes des Patentanspruches 1.
Derartige Verankerungseinheiten werden beispielsweise eingesetzt, um in Verbindung mit Montageschienen Rohrleitungen an den Wänden, der Dekke oder dem Boden eines Gebäudes zu befestigen.

Durch die DE 44 47 456 C2 ist eine Verankerungseinheit bekannt, die zwischen der Gewindeplatte und der Halteplatte als Einstelleinrichtung einen Abstandhalter aus einem komprimierbaren Material aufweist, der eine drehfeste Verbindung zwischen den beiden angesprochenen Platten herstellt. Dieser in Einführrichtung der Schienenöffnung komprimierbare Abstandhalter erlaubt eine Vorpositionierung der Verankerungseinheit innerhalb der Montageschiene, wobei ein das Gewinde der Gewindeplatte durchgreifender Gewindestab durch Anziehen den Abstand zwischen dieser Gewindeplatte und der Halteplatte so lange verringert, bis diese an den Haltevorsprüngen der Montageschiene definitiv festgelegt sind. Zur Sicherung wird eine Kontermutter auf den Gewindestab gegen die Halteplatte verspannt.

Nachteilig bei dieser bekannten Anordnung ist, daß die Verankerungseinheit relativ kompliziert aufbaut und zur Gewährleistung eines einfachen Einbaus einen Abstandhalter zwischen den Stützteilen und dem Gegenhalter erfordert, wobei eine sichere Vorfixierung ohne Verrutschen entlang der Schiene erst dann eintritt, wenn durch Anziehen des Gewindestabes und/oder der Kontermutter der Abstandhalter derart komprimiert ist, daß er an den freien Enden der Haltevorsprünge unter Reibschluß anstößt.

Durch die DE 196 17 750 C1 ist eine Verankerungseinheit bekannt, bei der die Halteplatte mit der Gewindeplatte über das Rückstellmittel in Form einer Kreisbogenfeder zusammenwirkt, deren eines freies Schenkelende über einen Längskanal an der Gewindeplatte angreift und mit ihrem anderen Schenkelende in eine Ausnehmung der Halteplatte. Diese bekannte Anordnung wird zunächst von oben in Längsrichtung des Längsprofils mit der Gewindeplatte und der Halteplatte eingeführt, wobei dann nach Verdrehen der Halteplatte in ihre Montagestellung die Gewindeplatte mittels schiefer Ebenen an der Halteplatte über die Haltevorsprünge der Montageschiene angehoben und durch die Rückstellwirkung der Feder anschließend zusammen mit der Halteplatte in ihrer Montageposition in einer Art Schnappbewegung verrastet wird. Die Schenkel an der Halteplatte übergreifen dann die Montageschiene und liegen bündig an ihren Schienenlängswänden an. Durch die Verdrehbewegung von Hand, bei der die Halteplatte und die Gewindeplatte relativ zueinander bewegt werden, wird das Rückstellmittel in Form der Kreisbogenfeder vorgespannt, so daß diese eine Drehvorspannstellung einnimmt, bei deren schnappartigem Lösen in Richtung der Drehfreigabestellung dann die Gewindeplatte in drehentspannter Lage an die Montageschiene angreift. Bis zu dieser abschließenden Montagestellung sucht das bekannte Rückstellmittel den Abstand zwischen Halte- und Gewindeplatte zu verringern.

Die bekannte Verankerungseinheit baut kompliziert auf und ist mithin aufwendig in der Herstellung. Ferner ist der Montageaufwand erhöht, da zum Herstellen der Drehvorspannstellung entsprechend große Betätigungskräfte von Hand notwendig sind, bevor die Verankerungseinheit in einer unvorhersehbaren Schnappbewegung ihre Montagestellung einnimmt.

Die US-A-4,285,379 beschreibt eine gattungsgemäße Verankerungseinheit zum Befestigen von Gegenständen an einer Montageschiene mit einer Schienenöffnung, die von zwei Schienenlängswänden begrenzt ist, die an ihren einander zugewandten Seiten Haltevorsprünge aufweisen, die zwischen einer Gewindeplatte und einer mit Schenkeln versehenen Halteplatte über ein federelastisches Rückstellmittel klemmend festlegbar sind, das den Abstand zwischen der Halteplatte und der Gewindeplatte zu verringern sucht, wobei in zugeordnete Ausnehmungen in der Gewindeplatte die Schenkel der Halteplatte eingreifen und längs dieser Schenkel die Gewindeplatte verschiebbar angeordnet ist und wobei das federelastische Rückstellmittel an den Schenkeln der Halteplatte angreift, indem das Rückstellmittel in Form von zwei Federklammern einstückig mit den Schenkeln verbunden ist und die an der Unterseite der Gewindeplatte derart mit einer Vorspannung angreifen, daß vor dem Montagezustand an der Montageschiene Gewinde- und Halteplatte aneinanderliegen.

Um die Gewindeplatte verdrehsicher an den Schenkeln der Halteplatte zu sichern, ist neben der eigentlichen Gewindeplatte an ihrer Unterseite ein weiteres plattenartiges Fixierungsteil angeordnet, das zum einen dem Durchgriff der diametral einander gegenüberliegenden Schenkel der Halteplatte dient und zum anderen die Gewindeplatte zumindest teilweise außenumfangsseitig für die Lagefixierung umfaßt. Die Schenkel selbst sind als Biegeteile am Außenumfang der Halteplatte angesetzt, so daß insgesamt für die bekannte Lösung ein hoher Herstellaufwand notwendig ist, was die bekannte Lösung verteuert.
Ausgehend von diesem Stand der Technik liegt der Erfindung die Aufgabe zugrunde, eine Verankerungseinheit für eine Montageschiene zu schaffen, die die vorstehend beschriebenen Nachteile nicht aufweist und insbesondere konstruktiv einfach aufbauend sich kostengünstig realisieren läßt und dabei leicht zu montieren ist. Diese Aufgabe wird durch eine Verankerungseinheit mit den Merkmalen des Patentanspruches 1 in seiner Gesamtheit gelöst.
Dadurch, daß gemäß dem kennzeichnenden Teil des Patentanspruches 1 die Schenkel aus der Halteplatte ausgestanzt in einer Richtung vorstehen, die im wesentlichen senkrecht zu der Gewindeplatte ist, und daß das Rückstellmittel ein gummielastischer Ring, insbesondere ein O-Ring, ist, das mit den Schenkeln der Halteplatte verbunden ist, läßt sich in sehr kostengünstiger Weise mit nur wenig konstruktiv einfach aufbauenden Bauteilen die Verankerungseinheit erhalten. Das elastisch nachgiebige und vorgespannte Rückstellmittel in Form des gummielastischen Ringes übt eine Rückstellkraft derart auf die Gewindeplatte aus, daß die beiden Platten kraftschlüssig an den Haltevorsprüngen zur Anlage kommen. Die beiden Platten erfahren also ausschließlich eine axiale Relativbewegung, die mit geringen Betätigungskräften erreichbar ist. Die dahingehende Anordnung kann von Hand von außen in die Montageschiene eingesetzt und zu jeder beliebigen Montageposition verfahren werden, wobei diese Position kraftschlüssig für die weiteren Montageschritte beibehalten wird. Über die Schenkel an der Halteplatte ist die Gewindeplatte über ihren gesamten vorgegebenen Bewegungsbereich axial geführt und kann mithin immer eine definierte Lage zu der Halteplatte einnehmen. Die erfindungsgemäße Lösung baut somit konstruktiv einfach und platzsparend auf und läßt sich kostengünstig realisieren.

Die axiale Aufspannbewegung zwischen Gewinde- und Halteplatte läßt sich einfach von Hand erreichen, indem man die beiden Platten entgegen der Wirkung des Rückstellmittels auseinanderzieht und dann an der vorgesehenen Montageposition entlang der Montageschiene einfach losläßt. Vorzugsweise ist jedoch vorgesehen, daß die Gewindeplatte an mindestens zwei diametral zur Gewindebohrung gegenüberliegenden Eckbereichen jeweils mit einer Abschrägung versehen ist, die dem Untergreifen der Haltevorsprünge der Montageschiene dienen und dabei das Rückstellmittel vorspannen. Auf diese Art und Weise wird der Verbund aus den beiden Platten und dem Rückstellmittel in Längsrichtung auf die Montageschiene aufgesetzt, wobei die Gewindeplatte in die Schienenöffnung eingreift und wobei dann an der vorgesehenen Montageposition die beiden Platten von Hand über die Halteplatte gemeinsam und gleichsinnig verschwenkt werden. Die der Gewindeplatte zugeordneten Abschrägungen untergreifen dabei die Haltevorsprünge und aufgrund der derart gebildeten Zwangsführung findet die axiale Spannbewegung zwischen den beiden Platten entgegen der Wirkung des elastischen Rückstellmittels statt. Nimmt dann der Plattenverbund seine Montageposition quer zur Längsausrichtung der Montageschiene ein, sind diese in der dahingehenden Montageposition kraftschlüssig über das Rückstellmittel an der Montageschiene vorfixiert und über einen Gewindestab, der in die Gewindebohrung der Gewindeplatte einschraubbar ist, und über eine entsprechende Kontermutter läßt sich dann ein Montagevorgang abschließen. Auf diese Art und Weise läßt sich sehr rasch und mit geringen Betätigungskräften die gewünschte Montage herstellen.

Weitere vorteilhafte Ausgestaltungen sind Gegenstand der Unteransprüche.

Im folgenden wird die erfindungsgemäße Verankerungseinheit anhand eines Ausführungsbeispiels nach der Zeichnung näher erläutert.

Es zeigen in prinzipieller und nicht maßstäblicher Darstellung die
- Fig.1: in stirnseitiger Ansicht die montierte Verankerungseinheit;
- Fig.2: in seitlicher Ansicht den Plattenverbund mit Rückstellmittel;
- Fig.3a und 3b: in Stirn- bzw. in Seitenansicht die Halteplatte;
- Fig.4a,4b und 4c: in Draufsicht, Seiten- und Stirnansicht die Gewindeplatte.

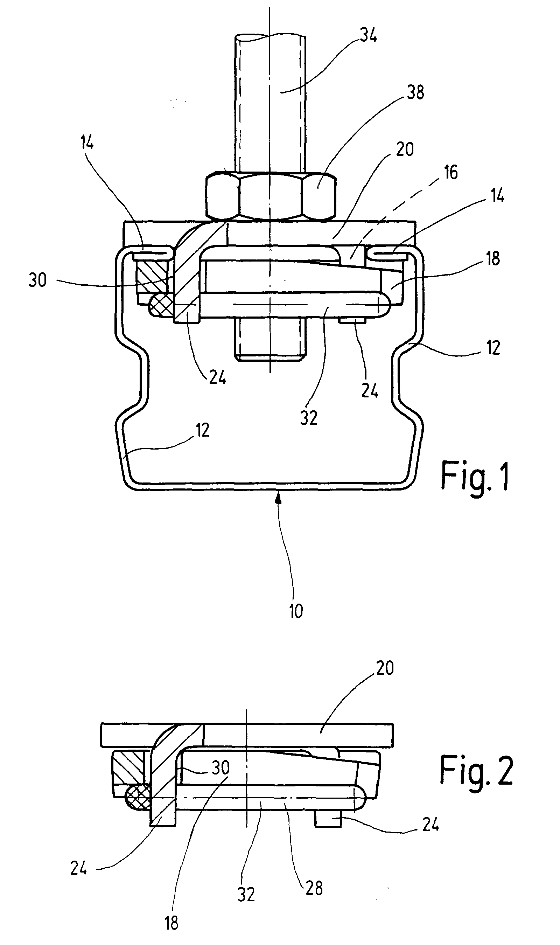

Die Fig.1 zeigt im Querschnitt die Montageschiene 10 mit zwei zu ihrer Längsachse symmetrisch angeordneten Schienenlängswänden 12. Die beiden Schienenlängswände 12 sind an ihren freien Enden um zunächst 180° und dann um 90° nach innen umgebogen, so daß zwei Haltevorsprünge 14 gebildet sind. Die Haltevorsprünge 14 liegen im wesentlichen in einer insbesondere horizontalen Ebene. Des weiteren begrenzen die beiden Haltevorsprünge 14 zwischen sich die Schienenöffnung 16, die die Umgebung mit dem Inneren der C-artigen Montageprofilschiene 10 verbindet. Wie insbesondere die Fig.1 des weiteren zeigt, sind die Haltevorsprünge 14 zwischen einer Gewindeplatte 18 und einer Halteplatte 20 festlegbar.

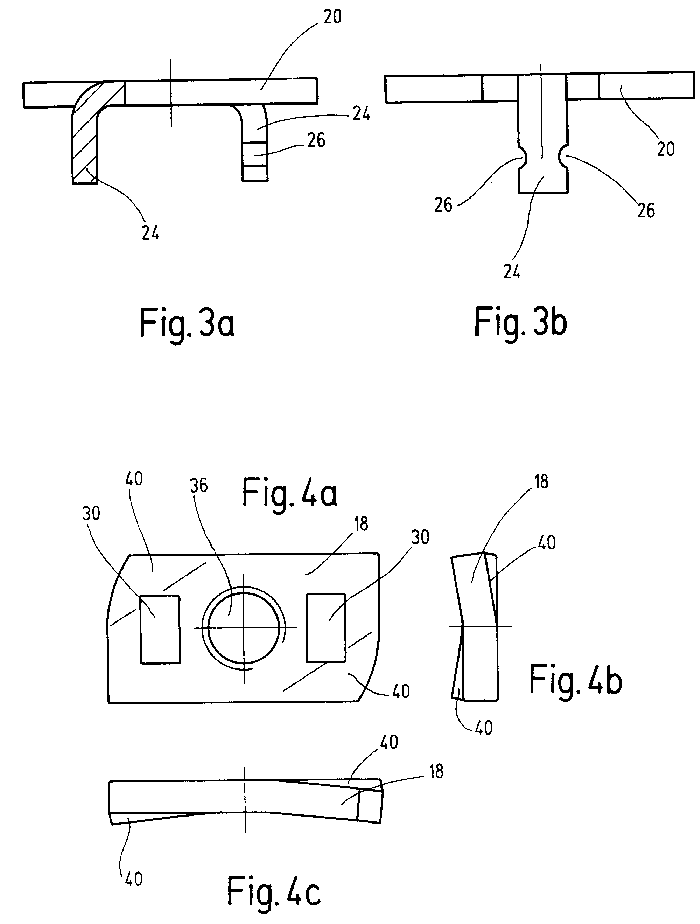

Die in den Fig.3a und 3b näher dargestellte Halteplatte 20 ist mit zwei diametral einander gegenüberliegenden Schenkeln 24 versehen, die in einem Winkel von etwa 90° nach unten gebogen sind, wobei diese vorzugsweise aus der eben verlaufenden Halteplatte 20 ausgestanzt sind. Innerhalb des Schienenprofils verlaufen, wie die Fig.1 zeigt, die beiden Schenkel 24 im wesentlichen parallel zu den Schienenlängswänden 12 der Montageschiene 10. In Richtung ihrer freien Enden weisen in denselben Höhenstufen die jeweiligen Schenkel 24 jeweils zwei einander gegenüberliegende kreisrunde Ausbuchtungen 26 auf, die für den Eingriff eines elastisch nachgiebigen Rückstellmittels 28 vorgesehen sind.

Wie die Fig.1 und 2 zeigen, greifen diese Schenkel 24 der Halteplatte 20 durch zugeordnete Ausnehmungen 30 in der Gewindeplatte 18, die wiederum zur Mitte der Gewindeplatte 18 diametral einander gegenüberliegend diese vollständig durchgreifen.

Das Rückstellmittel 28 ist aus einem gummielastischen Ring, insbesondere aus einem O-Ring 32, gebildet, das durch Eingriff in die Ausbuchtungen 26 mit den Schenkeln 24 der Halteplatte 20 formschlüssig verbunden ist. Wie die Fig.2 zeigt, ist der Abstand des Rückstellmittels 28 von der Unterseite der Halteplatte 20 derart gewählt, daß spielfrei in diesen Abstand die Gewindeplatte 18 eingreift. Für den Fall, daß ein Spiel vorhanden ist, sollte dieses jedenfalls nicht größer sein als die Dicke der Haltevorsprünge 14, damit diese noch kraftschlüssig zwischen den beiden Platten 18,20 aufgenommen werden können. Soll der Plattenverbund nach der Fig.2 an der Montageschiene 10 festgelegt werden, kann man die beiden Platten 18,20 von Hand entgegen der Wirkung des Rückstellmittels 28 auseinanderziehen und schiebt sie derart in die Schienenöffnung 16 ein, daß zwischen den Platten 18 und 20 die Haltevorsprünge 14 eingreifen können. Nach Loslassen stellt nun das Rückstellmittel 28 in Form des O-Ringes 32 die beiden Platten 18,20 derart kraftschlüssig aufeinander zu, daß diese entlang der Montageschiene 10 in ihrer jeweiligen Position gehalten sind, von dort aber von Hand auch leicht in Längsrichtung verfahren werden können, und nach Loslassen immer in ihrer jeweiligen Position verbleiben.

Für den Montagevorgang vorteilhafter ist jedoch, wenn, wie dies insbesondere die Fig.4b und 4c zeigen, die Gewindeplatte 18 diametral einander gegenüberliegend mit Abschrägungen 40 versehen ist. In einem dahingehenden Fall wird dann der Plattenverbund längs der Schienenöffnung 16 verfahren, wobei die Halteplatte 20 auf den Haltevorsprüngen 14 der Montageschiene 10 aufliegt und die Gewindeplatte 18 greift in Längsrichtung der Schienenöffnung 16 zwischen die beiden Haltevorsprünge 14 ein. Neben dieser angesprochenen Verschiebebewegung ist es aber auch bevorzugt möglich, den Plattenverbund an der vorgesehenen Montageposition seitlich oder von oben her auf die Montageschiene 10 in dieser Anordnung aufzusetzen, wobei die Gewindeplatte 18 in die Schienenöffnung 16 eingreift und die Halteplatte 20 auf der Montageschiene 10 aufliegt. Der Plattenverbund wird nunmehr gemeinsam und gleichsinnig in der Richtung gedreht, in der die Abschrägungen 40 die Haltevorsprünge 14 der Montageschiene 10 untergreifen können. Über die schiefe Ebenen bildenden Abschrägungen 40 wird dann entgegen der Wirkung des Rückstellmittels kontinuierlich die Gewindeplatte 18 axial von der Halteplatte 20 wegbewegt, wobei die Gewindeplatte 18 ständig kraftschlüssig an der Unterseite der Haltevorsprünge 14 angreift. Die dahingehende Drehvorspannbewegung ist abgeschlossen, sobald der Plattenverbund quer zur Schienenlängsrichtung ausgerichtet ist.

Zur Vervollständigung der Verankerungseinheit kann dann der Gewindestab 34 in die Gewindebohrung 36 eingeschraubt und dort festgelegt werden. Durch Aufschrauben einer Kontermutter 38 auf den Gewindestab 34 läßt sich dann definitiv der in Fig.1 dargestellte Montagezustand herstellen, wobei durch den Gewindestab 34 mit Kontermutter 38 die beiden Platten 18,20 mit verstärkter Anpreßkraft auf die Haltevorsprünge 14 einwirken und derart einen sicheren Verbund der Verankerungseinheit gewährleisten.

Da das Rückstellmittel 28 in Form des O-Ringes 32 unterhalb der Gewindeplatte 18 angeordnet ist, ist diese in ihrer Lage entlang den Schenkeln 24 der Halteplatte 20 gesichert und kann nicht unbeabsichtigt verloren gehen. Der O-Ring 32 ist in den Ausbuchtungen 26 der Schenkel 24 derart vertieft geführt, daß die einander abgewandten Randbegrenzungswände der Ausnehmungen 30 in der Gewindeplatte 18 in der Montagestellung des Plattenverbundes den O-Ring 32 seitlich überdecken und ihn insoweit vor Beschädigungen schützen. Sobald der Gewindestab 34 über die Kontermutter 38 an der Gewindeplatte 18 festgelegt ist, ist die Funktion des Rückstellmittels 28 für den Montagevorgang erfüllt, so daß ein späteres Versagen des Rückstellmittels 28 keine nachteiligen Folgen für die Verankerungseinheit hat.

## Patentansprüche

1. Verankerungseinheit zum Befestigen von Rohren od. dgl. Gegenständen an einer Montageschiene (10) mit einer Schienenöffnung (16), die von zwei Schienenlängswänden (12) begrenzt ist, die an ihren einander zugewandten Seiten Haltevorsprünge (14) aufweisen, die zwischen einer Gewindeplatte (18) und einer mit Schenkeln (24) versehenen Halteplatte (20) über ein federelastisches Rückstellmittel (28) klemmend festlegbar sind, das den Abstand zwischen der Halteplatte (20) und der Gewindeplatte (18) zu verringern sucht, wobei in zugeordnete Ausnehmungen (30) in der Gewindeplatte (18) die Schenkel (24) der Halteplatte (20) eingreifen, wobei längs dieser Schenkel (24) die Gewindeplatte (18) verschiebbar angeordnet ist und wobei das Rückstellmittel (28) an den Schenkeln (24) der Halteplatte (20) angreift, **dadurch gekennzeichnet, daß** die Schenkel (24) aus der Halteplatte (20) ausgestanzt in einer Richtung vorstehen, die im wesentlichen senkrecht zu der Gewindeplatte (18) ist, und daß das Rückstellmittel (28) ein gummielastischer Ring, insbesondere ein O-Ring (32) ist, das mit den Schenkeln (24) der Halteplatte (20) verbunden ist.

2. Verankerungseinheit nach Anspruch 1, **dadurch gekennzeichnet, daß** zum Festlegen des Rückstellmittels (28) der jeweilige Schenkel (24) der Halteplatte (20) Ausbuchtungen (26) aufweist, in die das Rückstellmittel (28) eingreift.

3. Verankerungseinheit nach Anspruch 1 oder 2, **dadurch gekennzeichnet, daß** der Abstand des Rückstellmittels (28) von der Halteplatte (20) derart gewählt ist, daß spielfrei in diesen Abstand unter kraftschlüssiger Anlage mit der Halteplatte (20) die Gewindeplatte (18) eingreift.

4. Verankerungseinheit nach einem der Ansprüche 1 bis 3, **dadurch gekennzeichnet, daß** die Gewindeplatte (18) mittig eine Gewindebohrung (36) für einen Gewindestab (34) aufweist, auf den eine Kontermutter (38) aufschraubbar ist, die im Montagezustand in Anlage mit der Halteplatte (20) ist.

5. Verankerungseinheit nach Anspruch 4, **dadurch gekennzeichnet, daß** die Gewindeplatte (18) an mindestens zwei diametral zur Gewindebohrung (36) gegenüberliegenden Eckbereichen jeweils mit einer Abschrägung (40) versehen ist, die dem Untergreifen der Haltevorsprünge (14) der Montageschiene (10) dienen und dabei das Rückstellmittel (28) vorspannen.

## Claims

1. Fastening unit for securing pipes or similar objects to a mounting rail (10) with an opening (16) in the rail which is delimited by two longitudinal walls (12) of the rail, having on their sides facing each other retaining projections (14) clampable between a threaded plate (18) and a holding plate (20) with an arm (24) over a resilient return element (28) which tends to reduce the distance between the holding plate (20) and the threaded plate (18), the arms (24) of the holding plate (20) engaging in the respective apertures (30) in the threaded plate (18) and the threaded plate (18) being slidable along these arms (24) of the holding plate (20), the return element (28) engaging at the arms (24) of the holding plate (20), **characterised in that** the arms (24) are stamped out of the holding plate (20) and protrude in a direction which is mainly at right angles to the threaded plate (18) and that the return element (28) is an elastomeric ring, in particular an O-ring (32) connected with the arms (24) of the holding plate (20).

2. Fastening unit according to Claim 1, **characterised in that** each arm (24) of the holding plate (20) has indentations (26) for anchoring the return element (28) into which the said return element (28) engages.

3. Fastening unit according to Claim 1 or 2, **characterised in that** the distance of the return element (28) from the holding plate (20) is such that the threaded plate (18) engages into this space without play whilst being in positive contact with the holding plate (20).

4. Fastening unit according to one of the Claims 1 to 3, **characterised in that** the threaded plate (18) has a threaded bore (36) in the centre to accommodate a threaded rod (34) onto which a locknut (38) can be placed in contact with the holding plate (20) when in the assembled position.

5. Fastening unit according to Claim 4, **characterised in that** the threaded plate (18) is provided with a bevel (40) at each of the corner areas diametrically opposed to the threaded bore (36), intended to engage under the retaining projections (14) at the mounting rail (10) and preloading the return element (28) at the same time.

## Revendications

1. Unité d'ancrage destinée à fixer des tubes ou des éléments analogues contre un rail de montage (10), comprenant une ouverture de rail (16), délimitée par deux parois longitudinales de rail (12) qui, sur leurs côtés orientés l'un vers l'autre, sont munies de saillies de retenue (14), qui peuvent être bloquées par serrage, entre une plaque filetée (18) et une plaque de retenue (20) munie de branches (24), par l'intermédiaire d'un organe de rappel (28) élastique à la manière d'un ressort, qui tente de réduire la distance entre la plaque de retenue (20) et la plaque filetée (18), les branches (24) de la plaque de retenue (20) s'engageant dans des cavités (30) correspondantes, réalisées dans la plaque filetée (18), la plaque filetée (18) pouvant se déplacer le long de ces branches (24) et l'organe de rappel (28) entrant en contact avec les branches (24) de la plaque de retenue (20), **caractérisée en ce que** les branches (24) sont découpées à la matrice dans la plaque de retenue (20) sous forme de saillies orientées dans le sens perpendiculaire à la plaque filetée (18), et **en ce que** l'organe de rappel (28) est un anneau en caoutchouc élastique, en particulier un joint torique (32), qui est assemblé avec les branches (24) de la plaque de retenue (20) .

2. Unité d'ancrage selon la revendication 1, **caractérisée en ce que**, pour le blocage de l'organe de rappel (28), la branche (24) correspondante de la plaque de retenue (20) est munie de cavités (26), dans lesquelles s'engage l'organe de rappel (28).

3. Unité d'ancrage selon la revendication 1 ou 2, **caractérisée en ce que** la distance entre l'organe de rappel (28) et la plaque de retenue (20) est choisie de telle sorte que la plaque filetée (18) s'engage sans jeu dans cette distance en venant en appui par conjugaison de forme avec la plaque de retenue (20).

4. Unité d'ancrage selon l'une quelconque des revendications 1 à 3, **caractérisée en ce que** la plaque filetée (18) comporte en son centre une forure taraudée (36) destinée à recevoir une tige filetée (34), sur laquelle peut être vissé un contre-écrou (38) qui, en position de montage, est en appui contre la plaque de retenue (20).

5. Unité d'ancrage selon la revendication 4, **caractérisée en ce qu'**au moins deux zones d'angle de la plaque filetée (18), diamétralement opposées par rapport à la forure taraudée (36), sont munies chacune d'un chanfrein (40), qui est destiné à s'engager en dessous des saillies de retenue (14) du rail de montage (10) et, de ce fait, exerce une précontrainte sur l'organe de rappel (28).
